# EUROPEAN PATENT APPLICATION

(11) **EP 3 896 431 A1**
(43) Date of publication of application: **20.10.2021**
(21) Application number: 20174983.5
(22) Date of filing: 15.05.2020
(51) Int. Cl.: G01N 21/64

(54) **DEVICE AND METHOD FOR TIME-RESOLVING HYPERSPECTRAL IMAGING SPECTROSCOPY**

(30) Priority: 19.04.2020 US 202063012217 P
(71) Applicant: Adams, Bernhard W., Naperville, IL 60564 (US)
(72) Inventor: Adams, Bernhard W., Naperville, IL 60564 (US)
(74) Representative: Bobbert & Partner Patentanwälte PartmbB

(57) **Abstract**

The present disclosure relates to a device or system for performing imaging spectroscopy, in particular Fluorescence-Lifetime Imaging Spectroscopy, more particularly Time-resolving Hyperspectral Imaging Spectroscopy "THIS", the device comprising at least a detection sensor (9) providing a data stream of time-, location- and/or wavelength-tagged detection events. The present disclosure relates to a corresponding method for performing imaging spectroscopy, a processing, control and/or regulating unit (18) provided, configured and/or programmed for executing the method according to the present disclosure, a digital, particularly a non-volatile storage medium, a computer program product and a computer program.

## Description

The present invention relates to a device or system for performing imaging spectroscopy according to claim 1, a method for performing imaging spectroscopy according to claim 8, a processing unit, control and/or regulating unit according to claim 11, a digital storage medium according to claim 13, a computer program product according to claim 14 and a computer program according to claim 15.

In chemistry, biology, bio-medical, clinical and related fields, spectroscopic methods, in particular fluorescence spectroscopy, are widely used, in particular for spectroscopic detection of molecular species, such as e.g. proteins, their concentration, their chemical activity and/or their respective metabolic or otherwise functional roles. Corresponding applications are for example to be found in the fields of research on cancer, on infectious diseases and/or on other disorders on the cellular level, in chemistry and industry, e.g. in air-travel safety, homeland defense, chemical and/or biological weapons detection, in the detection of substances.

An object of the present invention is to provide a further device or system for performing imaging spectroscopy, in particular Fluorescence-Lifetime Imaging Spectroscopy (FLIM), more particularly Time-resolving Hyperspectral Imaging Spectroscopy (THIS). In addition, a method for performing imaging spectroscopy, a processing unit, control and/or regulating unit, a digital storage medium, a computer program product as well a computer program are to be specified.

This object and other objects of the present invention are achieved by the device or system for performing imaging spectroscopy having the features of claim 1. It may also be achieved by the method according to claim 8, the processing unit, control and/or regulating unit according to claim 11, the digital storage medium according to claim 13, the computer program product according to claim 14 and the computer program according to claim 15.

This object and other objects of the present invention may alternatively or additionally also be achieved by a device or system for performing imaging spectroscopy, in particular Fluorescence-Lifetime Imaging Spectroscopy (FLIM), more particularly Time-resolving Hyperspectral Imaging Spectroscopy (THIS) having a processing unit, control and/or regulating unit according to claim 11.

According to the present invention a device or system for, e.g. embodied and/or configured for performing imaging spectroscopy, in particular Fluorescence-Lifetime Imaging Spectroscopy, more particularly Time-resolving Hyperspectral Imaging Spectroscopy or time-resolved and wavelength-resolved imaging spectroscopy, in particular time-resolved and wavelength-resolved fluorescence-lifetime imaging spectroscopy, is thus provided.

The device or system according to the present invention comprises thereby at least one detection sensor, in particular an imaging detection sensor, designed and/or configured for measuring, detecting and/or providing a data stream, in particular a continuous and/or multi-dimensional data stream, or list, of time-tagged, location-tagged and/or wavelength-tagged detection events.

Alternatively or additionally, a device or system according to the present invention may comprise at least one detection sensor designed, embodied and/or configured for implementing Time-resolving Hyperspectral Imaging Spectroscopy (THIS) and/or it may comprise at least one processing unit, control and/or regulating unit provided, configured, embodied and/or programmed for executing the method according to the present invention, in particular for performing imaging spectroscopy, in particular Fluorescence-Lifetime Imaging Spectroscopy, more particularly time-resolved and wavelength-resolved imaging spectroscopy.

The method for performing imaging spectroscopy, in particular Fluorescence-Lifetime Imaging Spectroscopy, more particularly Time-resolving Hyperspectral Imaging Spectroscopy, according to the present invention, in particular encompasses (or comprises) at least the step of detecting, recording and/or providing a data stream, in particular a multi-dimensional data stream, or list, of time-tagged, location-tagged and/or wavelength-tagged detection events of or from a device or system (100) for performing imaging spectroscopy according to the present invention. Discretizing the data stream in one or more of its dimensions may also be encompassed by the method according to the present invention. As a further step, multiplexing the discretized data stream onto at least one of the other data dimensions may also be encompassed by the method according to the present invention.

A digital, particularly a non-volatile storage medium according to the present invention, particularly as a machine-readable data storage device, particularly as a disk, CD, EPROM or DVD, with electrically readable control signals may interact with a programmable computer system such that the mechanical steps of a method according to the present invention are prompted.

Thereby, all or some of the machine-induced steps of the method according to the present invention may be prompted.

A computer program product according to the present invention comprises a program code that is volatile or saved on a machine-readable medium for prompting the mechanical steps of the method according to the present invention when the computer program product runs on a computer. According to the present invention a computer program product can be understood as, for example, a computer program which is stored on a storage device, an embedded system as a comprehensive system with a computer program (e.g. an electronic device with a computer program), a network of computer-implemented computer programs (e.g. a client-server system, a cloud computing system, etc.), or a computer on which a computer product is loaded, executed, saved or developed.

The term *machine-readable medium* as used herein denotes in certain embodiments of the present invention a medium containing data or information which is interpretable by software and/or hardware. The medium may be a data medium, like a disk, a CD, a DVD, an USB stick, a flashcard, an SD card or the like.

A computer program according to the present invention comprises a program code for prompting the mechanical steps of a method according to the present invention when the computer program runs on a computer. A computer program according to the present invention can be understood as, for example, a physical, ready-for-distribution software product which comprises a computer program.

It also applies for the computer program product according to the present invention and the computer program according to the present invention that some or all of the mechanically executed steps of the method according to the present invention are prompted.

Embodiments according to the present invention may comprise one or several of the features mentioned supra and/or in the following in any combination unless the person skilled in the art considers the particular combination to be technically impossible.

In all of the previous and following embodiments, the use of the expression "may be" or "may have" and so on, is to be understood synonymously with "preferably is" or "preferably has," respectively, and so on, and is intended to illustrate embodiments according to the present invention.

Whenever alternatives with "and/or" are introduced herein, the person skilled in the art will understand the "or" contained therein as preferably "either or" and preferably not as "and".

Whenever numerical words are mentioned herein, the person skilled in the art shall recognize or understand them as indications of numerical lower limits. Hence, unless this leads to a contradiction evident for the person skilled in the art, the person skilled in the art shall comprehend for example "one" as encompassing "at least one". This understanding is also equally encompassed by the present invention as the interpretation that a numerical word, for example, "one" may alternatively mean "exactly one", wherever this is evidently technically possible in the view of the person skilled in the art. Both of these understandings are encompassed by the present invention and apply herein to all used numerical words.

Spatial indications made herein such as "top", "bottom", etc. refer in case of doubt to the illustrations as can be seen in the accompanying figures.

Whenever the expression "suitable", "provided", "designed", "configured" and/or "programmed", are used herein, the person skilled in the art may understand a particular embodiment of the respective apparatus. Both expressions may be used herein interchangeably.

Advantageous developments of the present invention are each subject-matter of the dependent claims and embodiments.

Whenever an embodiment is mentioned herein, it represents an exemplary embodiment according to the present invention which is not to be understood as limiting.

Embodiments according to the present invention may exhibit one, some, or all of the following features in any combination, provided it is not obviously technically impossible for the skilled in the art. Further advantageous developments of the present invention may be each subject-matter of the independent claims.

In the following, the expressions "imaging microscopy" and "imaging spectroscopy" may be used synonymously. Both expressions may be used herein interchangeably. In particular Fluorescence-Lifetime Imaging Spectroscopy may be understood as Fluorescence-Lifetime Imaging Microscopy (FLIM).

In the following, the expressions "Time-resolving Hyperspectral Imaging Spectroscopy", THIS or time-resolved and wavelength-resolved imaging spectroscopy" may be used synonymously. Both expressions may be used herein interchangeably.

In the following, the expressions "light-detection events" and "photon-detection events" may be used synonymously. Both expressions may be used herein interchangeably.

In the following, the expressions "hyperspectral" or "multispectral" may be used synonymously. Both expressions may be used herein interchangeably.

"Hyperspectral" or "multispectral" may be used and/or may be defined in particular to generally refer to a resolution, in particular a wavelength resolution, into more wavelength bands, or channels, than those wavelength bands, or channels, corresponding to the three primary-color wavelengths of human vision (e.g. RGB), including optionally wavelengths outside, e.g. above or below, the visible spectrum, e.g. wavelengths in the ultraviolet and/or the infrared part of the electromagnetic spectrum.

"Multispectral" may be used and/or may be defined in particular to refer to at least four wavelength bands, or channels, preferably of or all in the visible part of the electromagnetic spectrum.

"Hyperspectral" may be used and/or defined in particular to refer to at least four wavelength bands, or channels, where preferably at least one or some of them is/are outside, e.g. below or particularly above, the visible part of the electromagnetic spectrum, e.g. in the ultraviolet part of the electromagnetic spectrum.

In the following, the expressions "time-resolved and wavelength-spectral resolved" or "time-dependent and spectral dependent" may be used synonymously. Both expressions may be used herein interchangeably.

In the following, the expressions "data set" and "data stream" may be used synonymously. Both expressions may be used herein interchangeably.

A "two-dimensional detection sensor" may be understood e.g. as a sensor or sensor system for detecting, recording, acquiring, sensing, measuring, providing and/or conveying at least two-dimensional information and/or signals, in particular time-dependently.

"Imaging sensor" or "imaging detection sensor" may be used herein interchangeably and may refer e.g. to a sensor or sensor system for recording, acquiring, sensing, measuring and/or conveying images, in particular light or radiation, e.g. electromagnetic radiation, in particular time-dependently.

Whenever the expression "light" is used herein, it may be understood generally as radiation or electromagnetic radiation, in particular as other electromagnetic radiation as well.

A "continuous data stream" may preferably be understood as a not gated and/or not modulated data stream, in particular a data stream representing information coming and/or obtained e.g. from an investigated, captured and/or measured sample, wherein no any further time dependence, such as e.g. time-gating and/or modulation, has been introduced.

A "Continuous Ultrafast Time-resolving Imaging Detection (CUTID) sensor" may preferably be understood as any sensor embodied and/or configured for providing photon-sensing events as a continuous, i.e., not gated or modulated, data stream at high rate and high time resolution, or as any sensor comprising a sensor technology enabling data-acquisition of photon-sensing events as a continuous, i.e., not gated or modulated, data stream at high rate. A "Continuous Ultrafast Time-resolving Imaging Detection (CUTID) sensor" may differ from a conventional sensor, e.g. a conventional FLIM sensor, only in the sensor itself and/or in the way how the data are recorded as a list of time-tagged and image-location-tagged events. From such a list, a time-domain and/or a frequency-domain of the data may be advantageously extracted.

A "high rate", in particular a "high photon-detection event rate", may preferably be understood as the detection of two or more individually resolved photons per Physical Detector-Readout Time Interval (PDRTI).

A "physical detector-readout time interval (PDRTI)" may or is to be understood as the time interval for electrical signals to leave a detector front-end hardware and enter processing electronics, in particular irrespective of rate-handling capabilities of the processing electronics. In particular PDRTI may refer to the fundamental limitations of a given detector technology, independently of electronics, in particular actually used electronics, in particular electronics not being an integral part of the photon-sensing or measurement process itself.

A "high time resolution" may be understood as a temporal resolution of photon detection, including e.g. further data processing, attributing said photon to a time interval defined to some nanoseconds, e.g. one up to 10 nanoseconds, or below one nanosecond, e.g. within a sub-nanosecond range, e.g. 50 picoseconds or less, or any particular value comprised within these intervals.

A "high-performance detection sensor" may preferably be understood as a detection sensor combining data-acquisition, in particular at least two-dimensional data-acquisition, e.g. imaging, with high time resolution, in particular high intrinsic and/or inherent time resolution, and high-rate capability.

A "high-dimensional data" may be understood as data being at least or more than two-dimensional.

A "low photon flux" may preferably be understood as a photon number at least at the threshold of, or necessary for providing a useful image per image-acquisition time interval. In a typical laboratory-based application, this threshold may be of the order of a thousand photons per second. In applications requiring rapid screening of samples, this threshold may however lie much higher, e.g., roughly and/or application-dependent, one, some or some tens of thousands of photons per second, or any particular value comprised within these intervals.

A "low dark noise level" may be preferably understood as a rate of noise events, i.e., false events not due to a photon, being significantly below, in particular negligible, as compared to as the rate of true and/or actual photon detection events.

In the context of the present invention a rapid movement of a sample may exemplarily be understood as a displacement of a sample or sample support while data are being acquired from different, e.g. adjacent sections, of it, and/or brought successively into an active data-acquisition region of a detection system or device taking or acquiring data, in particular at high rate, in particular at a high sustained rate.

In the context of the present invention a rapid pulsation or pulsation rate, in particular of an excitation source, e.g. a light excitation source, may exemplarily be understood as the excitation, e.g. illumination, of a particular region in the detection system, e.g. by radiation or light pulses, in particular light pulses being considerably shorter than the required and/or actual time resolution, e.g. 50 picoseconds, and that may repeat at a rate required to illuminate different, in particular adjacent, regions of a sample moving, or being moved, through a data-acquisition region, e.g. at a rate of at least one or some million pulses per second, in particular where the sample moves, or is being moved, at a velocity of e.g. at least one meter per second, or more, and the different or adjacent regions on which measurements are taken are e.g. one or some micro-meter(s) wide.

A "multi-dimensional stream or set" may be understood and/or defined as a stream or set of data or of data stream comprising or consisting of a plurality of individual voxels or elements having at least one, two or more coordinates and/or as their corresponding values at or for different points of time. For example a four-dimensional data stream or set may comprise or consist of a plurality of voxels or elements preferably containing or representing a measured physical value, e.g. a fluorescent intensity, at a location x, y of the detection sensor, for a time t and a wavelength λ. As a further example a three-dimensional data stream or set may comprise or consist of a plurality of voxels or elements preferably containing or representing a measured physical value, e.g. light or fluorescent intensity, at a location x, y of the detection sensor, for a time t.

A "detection event" may be understood and/or defined as the measurement or detection of at least one particular physical value(s), e.g. light or fluorescent intensity, by means of a detection sensor. Thereby, the detection sensor may be configured for detecting and/or measuring such a value for at least a particular location on or of the sample, in particular at or for a particular and/or singular point of time or time. The detection sensor may preferably be configured for simultaneous detection and/or measurement of a plurality of values, in particular corresponding to a plurality of locations on or of the sample with e.g. coordinates x, y, e.g. by means of a plurality of different sensing or measuring units, e.g. pixels, especially correlated or correlating to particular locations on or of the sample, in particular at or for a particular and/or singular point of time or time. A "detection event" may exemplarily be, be represented by or defined as a two-dimensional set of values, e.g. an image, at or for a particular and/or singular point of time, e.g. t0.

A "time-tagged detection event" may be understood and/or defined as a plurality of "detection events" acquired during a time interval, e.g. T, i.e. at or for a plurality of particular and/or singular points of time or times, e.g. within an interval T extending from one first point of time or time, e.g. t1, to a second point of time or time, e.g. t2. A "time-tagged detection event" may exemplarily be, be represented by or defined as a three-dimensional set of values, in particular a two-dimensional set of values, e.g. an image, obtained at or for each particular and/or singular point of time or time comprised within said time interval, e.g. T. A time interval T may exemplarily correspond to a, preferably expected, length of time for optical decay, e.g. fluorescence, e.g. of a particular sample and/or species to be investigated and/or analysed, or to a predefined and/or otherwise pre-set time interval T. A time interval T may exemplarily correspond to at least one, or more, such lengths or periods of time, or time intervals T, and/or predefined and/or otherwise pre-set time intervals, e.g. a series, in particular a time-tagged series, of such intervals T.

A "location-tagged detection event" may be understood as a detection event corresponding, or being at least related to (a) particular location(s) on or of the sample, e.g. defined by coordinates x, y.

A "time-tagged and location-tagged detection event" may be understood as a location-tagged detection event at or for at least a particular and/or singular point(s) of time or time(s), e.g. t0, and/or for at least a time interval, e.g. T, in particular each point of time or time within such an interval.

A "time-tagged, wavelength-tagged and location-tagged detection event" may be understood as a "time-tagged and location-tagged detection event", where at least one of the coordinates of (a) particular location(s), e.g. x' and/or y', of the detection sensor may correspond to at least one of the coordinates on or of the sample or sample position, e.g. x and/or y, the remaining coordinate of the detection sensor, e.g. respectively x' and/or y', corresponding or being at least related to a wavelength λ.

A "time-tagged, wavelength-tagged and location-tagged detection event" may in particular be understood as a "time-tagged and location-tagged detection event", where at least one of the coordinates of (a) location(s) of the detection sensor, e.g. x' and/or y', may correspond to at least one of the coordinates on or of the sample or the sample position, e.g. x and/or y, the remaining coordinate of the detection sensor, e.g. respectively x' and/or y', corresponding or being at least related to a wavelength λ, the remaining coordinate of the sample, e.g. respectively x and/or y, corresponding or being at least related to at least a time t indexed time interval T, in particular within which all the pertinent information of the detection event is or may be included or comprised, e.g. where one discretized coordinate (x or y) of the sample is or may be multiplexed onto the time coordinate.

The expression "coherent control" may be understood as a technique of specifically exciting a molecular species of interest, in particular by use of a light pulse with a particular spectro-temporal profile (also known as Wigner distribution) guiding the electronic excitation along a molecule specific pathway. Typically, the Wigner distribution may thereby be determined by a combination of theoretical insights and empiricism as disclosed e.g. in Rep. Prog. Phys. 66 859-942 (2003), Science 282_5390, 919-922 (1998), Acc. Chem. Res. 32_12, 1007-1016 (1998), and/or other references listed therein.

"Conventional FLIM" is generally performed in the time domain or in the frequency domain. In the time domain, the time of fluorescent-photon detection relative to an excitation pulse is recorded in a histogram over discretized time. This histogram, or intensity curve over time, is then evaluated to find an exponential decay time component. In the frequency domain, the excitation light source is modulated at a variable frequency ω and the fluorescent response follows at the same frequency, but at a phase shift depending on both the exponential decay time and on the frequency ω. The phase shift is determined by modulating the detector sensitivity, also at the frequency ω and by probing the response at different phase shifts relative to the excitation, and for a range of N discrete frequencies ω amounting to the Fourier transform of the multiexponential decay (phasor transform).

In particular "conventional FLIM" is commonly done or realized by combining an imager with an image intensifier to obtain photon sensitivity that can be modulated in time. For time-domain measurements, the sensitivity is gated on/off to set a time window, which is scanned in time to obtain a decay curve. In frequency-domain measurements, the sensitivity is modulated at a frequency ω to measure a phase shift as described above. Light reaching the image intensifier outside the set time window or at a phase of low sensitivity thus does not or only minimally contribute to the detection signal, even though it originates from a full sample excitation. The sample is thus subjected to excitation light that does not contribute to the measured data, which may be a problem with samples susceptible to bleaching or damage from excitation light. Furthermore, in order to record a full time-dependence curve in time-domain measurements, or to measure the fluorescence response phase in frequency-domain measurements, a time-consuming scan of the time gate or of the modulation phase is necessary.

Some devices and methods of the prior art may make use of or disclose hyperspectrally resolved image data. However, they do not use or disclose use of the time dependence of fluorescence, nor do they use or disclose an ultrafast image sensor that would be capable of resolving a nanosecond-scale fluorescent decay as this is or may be the case in the present invention. Some devices and methods of the prior art may make use of or disclose nanosecond timing combined with spectroscopy. However, they do not use or disclose the time resolution being used dependently of the spectral information, e.g. the timing and spectral information are processed in separate systems. Unlike the present invention, such devices and methods do not use the time-domain data for spectroscopic purposes and/or they do not use a unified or single detection sensor for the data-acquisition as this is or may be the case in the present invention.

In some particular embodiments of the present invention, the detection sensor may provide a data stream of time-tagged, wavelength-tagged and location-tagged detection events, in particular image-location-tagged detection events.

In several embodiments of the present invention, the detection events may be light-detection or photon-detection events.

In some embodiments of the present invention, the detection sensor is provided, embodied, configured and/or designed for detecting and/or providing a data stream, in particular a continuous data stream, without the necessity of time-gating or otherwise modulating a light sensitivity of the detection sensor.

Hence, it is possible to directly reduce the data-acquisition time, in particular an image-acquisition time.

In some particular embodiments of the present invention, the device or system according to the present invention is provided, embodied and/or configured for detecting, measuring and/or resolving a time dependence and/or a wavelength dependence over time, in particular over a time interval, of the data stream, following preferably pulsed, or otherwise modulated optical excitation, e.g. of a sample.

In some embodiments of the present invention, the detection sensor may preferably be a sensor combining imaging with an, in particular high or ultrafast, timing and/or wavelength resolution, in particular at high photon-detection event rates.

Hence, both the time dependence and the additional wavelength dependence over time may advantageously be measured and/or resolved by or by using the same detection sensor.

In several embodiments of the present invention, the detection sensor may be a photon detection sensor having preferably a photon sensitivity equal to or better than a few photons, in particular a sensitivity of a single photon or of some few individual photons, e.g. any number between one and 10 photons, while preferably also being capable of detecting multiple such photons nearly simultaneously, in particular in different locations on its sensitive area. The detection sensor may have such characteristics and/or sensitivity in particular in the visible and near-visible part of the electromagnetic spectrum.

Hence, it is possible to optimally use all photons on the detection sensor without losing any to sensitivity modulation. At the same time, using such a detection sensor may allow a reduction of the sample excitation dose for a given required amount of detected light, which may be particularly advantageous for samples which may be susceptible to bleaching or damage due to optical excitation.

In some particular embodiments of the present invention, the detection sensor is embodied, configured and/or designed for detecting and/or recording light-detection events with a rate of at least 2 photons per nanosecond.

In some embodiments of the present invention, the detection sensor may have a, in particular high, time resolution, in particular intrinsic time resolution, better than 100 nanoseconds, preferably better than some nanoseconds, e.g. one up to 10 nanoseconds, more preferably below one nanosecond, e.g. within a sub-nanosecond range, e.g. even more preferably better than some tens picoseconds, e.g. some 10 or 100 picoseconds, e.g. 50 picoseconds or even less, in particular any particular value comprised within these intervals. In particular the time resolution may be adapted and/or chosen according to the investigated species of interest, in particular according to the expected fluorescence-lifetime of the species of interest intended to be investigated and/or analyzed. In some embodiments of the present invention, in particular for use with samples exhibiting a comparatively slow response, a slower time resolution, e.g., one microsecond, may be sufficient. However, even in this case, using a detection sensor with a higher time resolution may not be an obstacle. Alternatively, in some embodiments it may be sufficient to use a detection sensor having a less-resolved time resolution, e.g. a time resolution of e.g. one, some, ten or some tens of microseconds or any particular value comprised within these intervals.

In several embodiments of the present invention the noise level, i.e. rate of falsely detected photons, is in particular relevant for obtaining a measurement, i.e. image, of sufficient quality, in particular with the least amount of light necessary or limited by the requirements to avoid damaging samples, in particular optically sensitive samples. What may constitute a noise level for sufficient image quality may depend largely on the considered particular application, ranging from a Signal-to-Noise Ratio (SNR) from about 1 in order to enable discernment of at least rough outlines of structures to 10³, or even better, for e.g. quantitative precision measurements. Both a lower minimum required SNR, and a lower intrinsic noise level may reduce the amount of excitation, e.g. light, required to perform a measurement. The detection sensor may in some embodiments exemplarily have a Noise-to-Signal Ratio (NSR) in the range of 10⁻³ to 10⁻², preferably better than 10⁻³, e.g. any particular value within these intervals.

In some particular embodiments of the present invention, the detection sensor may be a two-dimensional detection sensor, in particular an imaging sensor or imaging detection sensor.

In several embodiments of the present invention a "two-dimensional detection sensor", an "imaging sensor" and/or an "imaging detection sensor" may comprise, include and/or consist of a plurality of individual sensing and/or measuring units, e.g. pixels, preferably arranged to form an, preferably two-dimensional, array or matrix.

In some embodiments of the present invention the detection sensor may be, or comprise at least one, semi-conductor-based sensor and/or a photocathode, in particular a cooled photocathode, or any combination thereof. Such detection sensors may exemplarily be preferably used and/or configured for wavelengths below the visible part of the electromagnetic spectrum, e.g. the infrared part of it.

In several embodiments of the present invention the detection sensor may be a high-performance sensor combining imaging with high time resolution, in particular high intrinsic time resolution, and high-rate capability.

In some embodiments of the present invention, the detection sensor may be a Continuous Ultrafast Time-resolving Imaging Detection (CUTID) sensor, in particular a Large-Area Picosecond Photodetector (LAPPD).

In several embodiments of the present invention, the detection sensor may be a detection sensor having or being configured and/or embodied for having similar or even better performance parameters than a Large-Area Picosecond Photodetector (LAPPD), in particular than a LAPPD™ sensor.

In some embodiments of the present invention, the LAPPD sensor may be of the first or of the second generation. LAPPD sensors of the first generation may be in particular configured for direct recording and/or measuring of pulses. LAPPD sensors of the second generation may be in particular configured for direct recording and/or measuring by means of capacitive coupling, so that among others e.g. higher rates, particularly as compared to the first LAPPD generation, are achievable.

As a Large-Area Picosecond Photodetector (LAPPD), it is preferably possible to use a Large-Area Picosecond Photodetector (LAPPD) as disclosed e.g.: in "A Brief Technical History of the Large-Area Picosecond Photodetector (LAPPD) Collaboration", Bernhard W. Adams et al., e.g. on http://arxiv.org/abs/1603.01843, (2016), in "Timing characteristics of Large Area Picosecond Photodetectors Nuclear Instrument and Methods", in Physics Research NIMA A795_1, 1-11, (2015) from B.W. Adams, A. Elagin, H.J. Frisch, R. Obaid, E. Oberla, A. Vostrikov, R.G. Wagner, J. Wang, and M. Wetstein, in "An internal ALD-based high voltage divider and signal circuit for MCP-based photodetectors" by Bernhard W. Adams, Andrey Elagin, Jeffrey W. Elam, Henry J. Frisch, Jean-Francois Genat, Joseph S. Gregar, Anil U. Mane, Michael J. Minot, Richard Northrop, Razib Obaid, Eric Oberla, Alexander Vostrikov, Matthew Wetstein, NIMA 780_1, 107-113 (2015), in "Multiple-photon disambiguation on stripline-anode Micro-Channel Plates", by Glenn R. Jocher, Matthew J. Wetstein, Bernhard Adams, Kurtis Nishimura, Shawn M. Usman, NIMA 822_1, 25-33 (2016), in "Capacitively coupled pickup in MCP-based photodetectors using a conductive metallic anode", by E. Angelico, T. Seiss, B. Adams, A. Elagin, H. Frisch, E. Spieglan, NIMA 846_1, 75-80 (2017), in "Pilot production & commercialization of LAPPD(TM)", by Michael J. Minot, Daniel C. Bennis, Justin L. Bond, Christopher A. Craven, Aileen O'Mahony, Joseph M. Renaud, Michael E. Stochaj, Jeffrey W. Elam, Anil U. Mane, Marcellinus W. Demarteau, Robert G. Wagner, Jason B. McPhate, Oswald Helmut Siegmund, Andrey Elagin, Henry J. Frisch, Richard Northrop, Matthew J. Wetstein, NIMA 787_1, 78-84 (2015), in "20 cm sealed tube photon counting detectors with novel microchannel plates for imaging and timing Applications", by O.H.W. Siegmund, J.B. McPhate, A.S. Tremsin, S.R. Jelinsky, H.J. Frisch, J. Elam, A. Manec, R. Wagner, LAPPD Collaboration, M.J. Minot, J. Renaud, M. Deterando, Physics Procedia 37_1, 803-810 (2011), in "Large Area Picosecond Photodetector (LAPPD) Performance Test Results", by Michael J. Minot, Mark A. Popecki, Matthew J. Wetstein, IEEE-Nucl. Sci Symp. 2018 (2019), and/or in "Pilot production and advanced development of large-area picosecond photodetectors", by Michael J. Minot, Bernhard W. Adams, Melvin Aviles, Justin L. Bond, Christopher A. Craven, Till Cremer, Michael R. Foley, Alexey Lyashenko, Mark A. Popecki, Michael E. Stochaj, William A. Worstell, Anil U. Mane, Jeffrey W. Elam, Oswald H.W. Siegmund, Camden Ertley, Henry Frisch, Andrey Elagin, Proc. SPIE 9968_0X, 1-14 (2016). The relevant disclosure thereof is herewith fully incorporated by way of reference.

In particular embodiments of the present invention, the detection sensor is or may be configured and/or embodied for having or combining at least one of the following characteristics:
- two-dimensional spatial resolution, in particular two-dimensional imaging resolution;
- time resolution, in particular intrinsic time resolution, in the order or better than one nanosecond;
- operation at high data rates;
- high light sensitivity;
- low dark noise level.

In these and other embodiments of the present invention, the detection sensor may be able to produce data, in particular an image, with a time resolution, in particular intrinsic time resolution, of the order of some picoseconds to some tens of nanoseconds, e.g. any interval in the range of 20 picoseconds to 100 nanoseconds, in particular 50 picoseconds, or better, in particular any particular value in this interval, in particular with individual photons. Thereby, it should preferably not be necessary to shutter or otherwise modulate the sensitivity of the detection sensor.

In these and other embodiments of the present invention, the detection sensor may be embodied and/or configured to be sensitive to individual photons, in particular at wavelengths spanning the visible and/or nearly visible parts of the electromagnetic spectrum, e.g. wavelength ranges from some nanometers, e.g. 150 nanometers, up to some hundred nanometers, e.g. 1500 nanometers. However other ranges of the electromagnetic spectrum may be considered as well, and the detection sensor may be correspondingly embodied and configured for being particular sensitive for these other ranges of the electromagnetic spectrum.

In these and other embodiments of the present invention, the detection sensor may be embodied and/or configured to produce false "noise" events only at a negligible rate compared to as an actual photon rate, in particular an application-specific and/or conventional photon rate.

In these and other embodiments of the present invention, the device or system may be embodied and/or configured to perform imaging spectroscopy, in particular Fluorescence-Lifetime Imaging Spectroscopy (FLIM) with additional hyperspectral or wavelength resolution (THIS, Time-resolving Hyperspectral Imaging Spectroscopy), e.g. by having a detection sensor having or combining at least two of the above listed characteristics and/or at least a detection sensor having two-dimensional resolution sufficient to produce data, in particular images, in particular images with a time resolution of 100 picoseconds, or better, and in particular with a wavelength resolution, preferably of at least one or some tens, e.g. one to 10 tens, of spectral or wavelength channels, or band, preferably spanning a range of about 300 nm to 600 nm. The available wavelength resolution and/or wavelength channel number may correspond to the available spatial resolution of the detecting device.

In some embodiments of the present invention, the spatial resolution of the detecting device, in particular the image resolution of the detecting device may exemplarily have 200^{∗}200 pixels, but may also be implemented and/or designed in either dimension ranging from 50 pixels to one or several 1000 pixels. In at least one or two dimensions of the detecting device the resolution may be better than 1mm. As an embodiment example, the two-dimensional extension of the detecting device, in particular of the sensing surface of the detecting device, may be 10 cm^{∗}10 cm.

In several embodiments of the present invention, the device or system according to the present invention comprises at least one wavelength-dispersive element, in particular a grating, preferably a diffraction grating, a prism, and/or any combination therefrom.

In some particular embodiments of the present invention, the device or system according to the present invention comprises at least one optical element, e.g. at least a lens, preferably a microscope lens, or a lens system, e.g. an arrangement of lenses, preferably mechanically and/or automatically adjustable.

In some embodiments of the present invention, the device or system according to the present invention comprises at least one excitation source, in particular a radiation or light excitation source.

The excitation source may in some particular embodiments of the present invention be in particular a laser, for example a picosecond-pulsed laser and/or a laser with a particular and/or adaptable spectro-temporal profile, e.g. a laser with coherently controlled laser excitation or designed and/or configured for coherently controlled operation. The pulse rate, pulse duration, intensity and/or spectro-temporal profile of the excitation source may be adapted and/or matched for optimal and highly specific excitation of a particular species or sample of interest. The control and/or regulation of these parameters, in particular of coherently controlled excitation, may form part of the method according to some embodiment of the present invention and/or be achieved, controlled and/or regulated by the processing, control and/or regulating unit of the present invention.

As coherently controlled laser excitation or coherent control, it may preferably be possible to use the technology as disclosed e.g. in Rep. Prog. Phys. 66 859-942 (2003), Science 282_5390, 919-922 (1998), Acc. Chem. Res. 32_12, 1007-1016 (1998), and/or other references listed therein. The relevant disclosure of which is herewith fully incorporated by way of reference.

Hence, it may advantageously be possible to further enhance or improve FLIM and THIS of the present invention, in particular corresponding devices or systems for performing FLIM and THIS according to the present invention, in particular in terms of better sensitivity and/or selectivity.

In some particular embodiments of the present invention, the excitation source may be or comprise at least one light-emitting diode (e.g. LED) and/or laser, or an arrangement thereof, e.g. an array, for example of light-emitting diodes. The light-emitting diode(s) and/or the laser(s) may be pulsed. The light-emitting diode(s) may be so called fast or ultrafast diode(s).

In some embodiments of the present invention, the pulse duration of the excitation source may be in the sub-nanosecond range, e.g. one or more picoseconds.

In some particular embodiments of the present invention, the pulse duration of the excitation source may be in the nanosecond range, e.g. one or more nanoseconds.

In some embodiments of the present invention, the pulse duration of the excitation source may be in the sub-picosecond range, e.g. one or less picosecond.

In some embodiments of the present invention, the device or system according to the present invention comprises at least one wavelength-dispersive element.

In some particular embodiments of the present invention, at least one wavelength-dispersive element may be embodied, configured, designed and/or arranged such that radiation and/or light emitted from the excitation source may, is or can be imaged, spanned and/or projected from a sample or sample plane, or part thereof, in particular through at least one optical element, via reflection from and/or transmission through the at least one wavelength-dispersive element, to a surface of the detection sensor, or parts thereof.

In several embodiments of the present invention, the device or system according to the present invention comprises at least one means for, or way of, projecting light and/or radiation emitted from the excitation (light) source as a line focus along one first direction of the sample or sample plane.

In some particular embodiments of the present invention, the excitation light source may be pulsed or otherwise modulated. The control or regulation of the excitation light source may additionally or alternatively be controlled and/or regulated by a control unit according to the present invention. The control or regulation of the excitation light source may additionally or alternatively occur in dependence on or at least in coordination with at least one means for, or way of, moving or driving the sample, in particular by means of the control unit according to the present invention.

In some embodiments of the present invention, the device or system according to the present invention comprises at least one means for, or way of, displacing, e.g. translating, moving, e.g. rotating, and/or driving the sample or a sample support, in particular at least in a second direction, in particular in a direction perpendicular to the first direction, in particular at a controllable velocity, e.g. by means of the controlling and regulating unit of the present invention.

In several embodiments of the present invention, the device or system according to the present invention comprises at least one processing, control and/or regulating unit for, in particular automatically, prompting and/or executing the method according to the present invention.

In some embodiments of the present invention, the device or system according to the present invention comprises a storage medium.

In several embodiments of the present invention, the storage medium may be configured for storing acquired data and/or may comprise or include a database of reference signatures or data, in particular FLIM and/or THIS data, of particular species.

In some particular embodiments of the present invention, the detection sensor is not a standard or conventional FLIM-sensor, in particular not a low-rate detection sensor and/or not a detection sensor operated at low photon flux.

In some other embodiments of the present invention, the detection sensor is not a non-imaging sensor.

In some embodiments of the present invention, the device or system does not comprise different detection sensors for measuring or acquiring image and wavelength data, respectively, e.g. at least a first sensor for acquiring images and at least a second sensor for acquiring wavelength data.

In some particular embodiments, the detection sensor is not a, or does not comprise any photodiode.

In several embodiments of the present invention, the device or system may acquire images without using a timing parameter, e.g. a time gate or a modulation phase. In particular, the device or system may comprise a detection sensor embodied and/or configured for recording all photons after an optical event, e.g. a pulsed optical event or excitation, so that preferably no scan of time gate or detection sensor response phase is necessary.

In some particular embodiments of the present invention, the device or system is embodied and/or configured for inducing or generating an optical or photonic excitation, in particular a pulsed or otherwise modulated excitation, on or to the sample, sample plane or parts thereof.

In some embodiments of the present invention, the detection device is embodied and/or configured for imaging and/or measuring the spectral dependence or wavelength dependence during a time interval following an optical excitation, in particular during a time interval of fluorescent decay.

In several embodiments of the present invention, the dark noise level of the detection sensor, i.e. recorded events not due to an actual photon, may be significantly below the conventional dark noise from photodiodes, in particular significantly below the order of thousands or hundreds per second.

The method of the present invention is a method for performing imaging spectroscopy, in particular Fluorescence-Lifetime Imaging Spectroscopy (FLIM), more particularly Time-resolving Hyperspectral Imaging Spectroscopy (THIS), comprising at least the following steps:
- recording or acquiring a data stream, in particular a multi-dimensional and/or continuous data stream, or list, of time-tagged, location-tagged and/or wavelength-tagged detection events, in particular image-location-tagged detection events, of a device or system for performing imaging spectroscopy, in particular of the present invention;
- discretizing the data stream in one or more of its dimensions; and
- multiplexing the discretized data stream onto at least one of the other data dimensions.

Hence, it may advantageously be possible to transmit high-dimensional data over a lower-dimensional communication channel and/or or to store the high-dimensional data in a lower-dimensional medium. This may be achieved by discretization and/or mapping from one or more of the original dimensions of the multi-dimensional data stream or list into a multiplexed form of other ones.

The concept of discretizing and/or mapping a multi-dimensional data stream in one or more of its dimensions and multiplexing the discretized multi-dimensional data stream onto at least one of the other data dimensions may be exemplarily be understood by way of the example of the transmission of a three-dimensional (e.g. two-dimensional image and time) data stream of a movie over the single dimension of a data channel, such as modulation on a radio signal. In such a case, the flow of time is broken up into still images, which are further broken up into lines and pixels along the lines, and the pixels are transmitted serially within a serial sequence of image frames. A similar procedure is explained below, in particular with reference to the drawings, in further details for multiplexing e.g. a four-dimensional data stream, into a three-dimensional data stream.

In some embodiments of the present invention, the multi-dimensional data stream or set may simultaneously be of time-domain and of frequency-domain type.

In some particular embodiments of the present invention, the method comprises a step of extracting a time-domain and/or frequency-domain from the list of time-tagged, location-tagged and/or wavelength-tagged detection events.

In some embodiments of the present invention, the data stream, in particular the multi-dimensional data stream, is multiplexed in intervals spaced farther than an original range of the data in the other dimensions.

In some particular embodiments of the present invention, the device or system for performing imaging spectroscopy is a device or system for performing imaging spectroscopy according to the present invention.

In some particular embodiments of the present invention, the multi-dimensional data stream is a continuous data stream.

In some embodiments of the present invention, the multi-dimensional data stream is a four-dimensional data stream, in particular a THIS data stream.

In some particular embodiments of the present invention, a data stream, in particular a continuous and/or multi-dimensional data stream may be a data stream of time-tagged, location-tagged and/or wavelength-tagged detection events, in particular image-location-tagged detection events.

In some embodiments of the present invention, a four-dimensional data stream, in particular a four-dimensional THIS or THIS data stream, may preferably be multiplexed into a three-dimensional data stream, in particular into a three-dimensional THIS data stream.

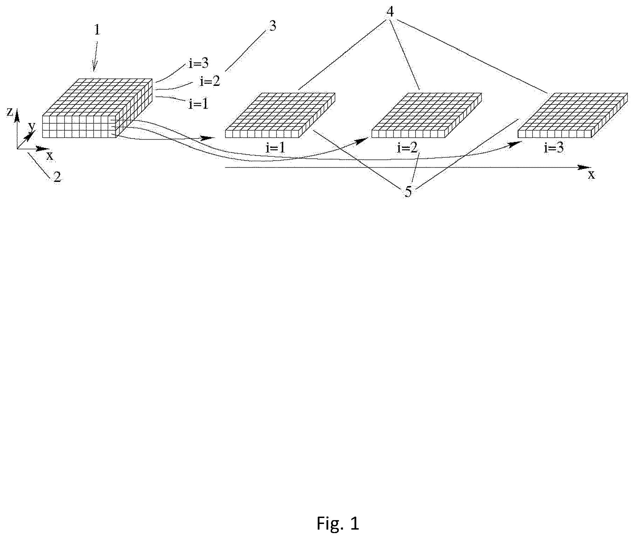

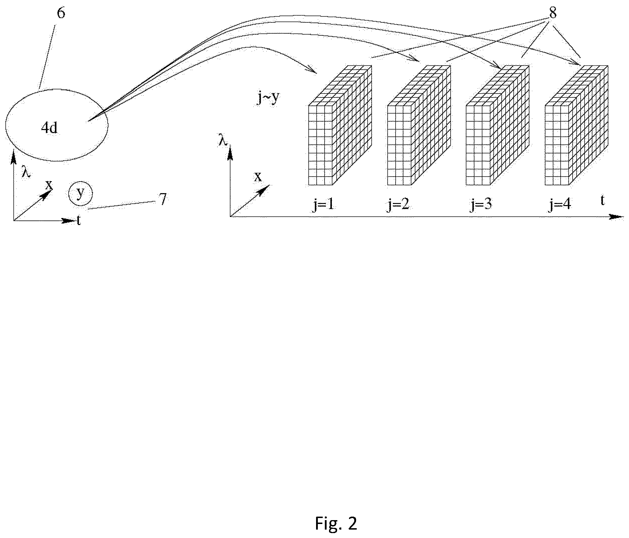

In some particular embodiments of the present invention, a four-dimensional data stream, or data set, may be time-multiplexed into three dimensions, in particular into spatial dimension, or two-dimensional, and time. This may in particular be possible when two-dimensional data of the detection sensor, in particular data in the image, and the spectral dimension are discretized into pixels and wavelength intervals while data in the time dimension are captured only over finite intervals. Successive data intervals in one of the discretized dimensions can then be mapped onto successive time intervals. In an abstract representation, a four-dimensional slab representing the data may thus be disassembled and multiplexed into a finite number of three-dimensional slabs. The underlying concept is illustrated in FIG. 1 for the graphically less challenging case of 3 dimensions multiplexed into two. An abstract representation similar to FIG. 1 is shown in FIG. 2 for multiplexing one out of four data dimensions onto one of them, namely time, as this may be preferably the case while implementing Time-resolving Hyperspectral Imaging Spectroscopy (THIS) or more generally processing a four-dimensional data stream.

In some particular embodiments of the present invention, the multi-dimensional data stream is or may be discretized in at least one spatial dimension of a sample on which imaging spectroscopy is intended to be, is or was performed, and multiplexed onto or over a time axis.

In some embodiments of the present invention, the four-dimensional data stream resolves recorded or acquired data, in particular fluorescence data, in four dimensions, in particular into a two-dimensional dimension or data, e.g. an image, time and wavelength spectrum.

In some particular embodiments of the present invention, the method may comprise the step of providing for, inducing and/or generating an optical or photonic excitation, in particular on or to a sample, sample plane or at least parts thereof.

The optical excitation may be a pulsed or otherwise modulated excitation.

In some embodiments of the present invention, the method may comprise the step of operating and/or controlling at least an excitation source coherently, e.g. operating the excitation source under the principle of coherent control as previously discussed.

The target, species of interest or sample may be or at least comprise e.g. proteins and/or molecules, preferably able to be excited to fluorescence by means of light, especially pulsed light or light otherwise modulated in time.

In several embodiments of the present invention, the method may comprise the step of recording spectral shifts or wavelength dependence during the time of fluorescent decay following an initial optical excitation.

In some particular embodiments of the present invention, the method may comprise the step of pproviding at least one target, species of interest or sample to be analysed and/or investigated.

In several embodiments of the present invention, the step of acquiring data, in particular two-dimensional data, from a detection sensor, e.g. an image, may in particular occur without use of a timing parameter, e.g. without time gate or modulation phase.

In some particular embodiments of the present invention, the method may comprise the step of transmitting data, e.g. over a lower-dimensional communication channel, and/or of storing recorded or multiplexed data on a storage medium, in particular on a lower-dimensional storage medium.

In some embodiments of the present invention, the method may comprise the step of moving the sample or a sample support.

In some particular embodiments of the present invention, the method may comprise the step of controlling, regulating and/or adapting the speed of the sample motion and a rate of the optical excitation. This may be optionally controlled and/or regulated by the processing unit, control and/or regulating unit of the present invention.

In some embodiments of the present invention, the method may comprise the step of comparing acquired or recorded data with reference signatures or data, in particular FLIM and/or THIS data, of particular species. The reference signatures or data may optionally be stored on an external medium or on a storage medium of the device or system of the present invention.

In some particular embodiments of the present invention, the method may comprise the step of outputting a signal, in particular a signal representing the acquired or recorded data and/or parts thereof, or result signals indicative of e.g. a comparison of the acquired or recorded data with reference signatures or data.

In some embodiments of the present invention, the method may comprise the step of creating a library or database of reference signature of particular species of interest, e.g. particular proteins and/or molecules.

In some particular embodiments of the present invention, the method may comprise the step of comparing data acquired and/or recorded with the device and/or system according to the present invention with a library or database of reference signatures.

In some embodiments of the present invention, the method may comprise the step of outputting the result of a comparison of data acquired and/or recorded with the device and/or system according to the present invention with a library or database of reference signatures, e.g. as an output signal, in particular to an output device and/or a storage device.

In some particular embodiments of the present invention, the method may comprise the step of measuring and/or assessing how the corresponding FLIM and/or THIS signature(s) of a sample of a particular species of interest change(s) due to the presence of another species in the investigated sample of interest. The corresponding assessment and/or recorded data may be stored, e.g. on a storage device, in particular for further reference and/or comparison.

In some particular embodiments of the present invention, the data stream is not resolved in three dimensions, in particular not as in conventional or standard FLIM, more particularly not as a two-dimensional image, (e.g.) time and an integration over the wavelengths.

In some embodiments of the present invention, the data stream is not not-spectrally resolved.

The processing, control and/or regulating unit of the preset invention is provided, configured and/or programmed for executing and/or performing the method according to the present invention.

The speed of the sample motion and the excitation light source, in particular the rate and/or spectro-temporal profile of the optical excitation, may in some embodiments be controlled and/or regulated by the processing unit, control and/or regulating unit of the present invention.

The processing unit, control and/or regulating unit according to the present invention may be connected, or at least in, preferably bilateral, data communication, to at least one of the detection sensor, the excitation light source, the optical element, the means for controlling and/or regulating the movement of the sample, and a storage medium.

In some embodiments of the present invention, the processing unit, control and/or regulating unit may be provided, configured and/or programmed for outputting signals to and/or receiving signal(s) from at least one device or system (100) for performing imaging spectroscopy according to the present invention, or parts, e.g. devices, thereof, or may be at least in data communication with it and/or them.

All statements, in particular advantages, made for the device or system, or its devices, also apply to the method and the processing, control and/or regulating unit and vice versa. In particular, method steps corresponding to the functions disclosed herein with respect to the device or system, or any of its components, are also disclosed herewith as optional steps of the method according to the present invention. This applies, e. g., in particular to recording or measuring the list of time-tagged, location-tagged and/or wavelength-tagged detection events as discussed with respect to the detection sensor, to discretizing the data stream, to multiplexing the discretized data stream, to outputting a signal, and to controlling the device or system for performing imaging spectroscopy and so on.

The spectroscopic method and/or device according to the present invention may advantageously enable rapid, near-instantaneous results and/or may be repeated multiple times. additionally, the spectroscopic method and/or device according to the present invention may provide results without the need for lengthy analytic-chemical reactions and/or even without requiring addition of fresh reagents each time.

The spectroscopic method and/or device according to the present invention may advantageously further provide detailed information regarding the specificity, the respective identity, concentration and/or the chemical activity of e.g. proteins, biological, target or sample molecules and/or other molecular species, as well as e.g. their metabolic roles and/or metabolic dynamism, their dynamics, for example growth.

The present invention may find use and application in particular in chemistry, biology, medicine and related fields, e.g. in research on cancer, infectious diseases and/or other disorders on the cellular level. The present invention is however not limited thereto and may also find use and application in other application areas, e.g. in the detection of hazardous substances.

In some particular embodiments of the present invention, the technique and informative value of imaging spectroscopy may be extended, in particular by enabling the resolving of the time dependence of fluorescence and/or of an additional wavelength or spectral dimension of fluorescence over time and/or, more particularly, by use of a sensor combining imaging with an ultrafast timing resolution at high photon-detection event rates.

In some other embodiments of the present invention, a higher sample-species identification and/or a better determination of chemical activity may advantageously be achieved, in particular due to the measurement of the additional wavelength-spectral dimension and/or time dependence of the fluorescence and/or, more particularly, by use of a sensor combining imaging with an ultrafast timing resolution at high photon-detection event rates.

In some embodiments of the present invention, the efficiency and throughput of imaging spectroscopy may quantitively be improved.

In some other embodiments of the present invention, a reduction of possible sample damages from optical excitation may advantageously be achieved, in particular due to optimal use of fluorescent light.

In some embodiments of the present invention, measuring the spectral or wavelength dependence during the time following optical excitation, in particular during the time of fluorescent decay, advantageously provide for valuable additional information, e.g. analytic and/or diagnostic information, in particular as compared to standard FLIM, in particular for discriminating between different molecular species and activities.

This is because standard FLIM obtains molecule-specific signatures from time constants of multi-exponential fluorescence decay indicative of internal molecular relaxation pathways following an initial excitation, however, these relaxation pathways are not only molecule-specific but are also influenced by the chemical environment, in particular by the presence of next neighbor complex molecules. Therefore, for example in biological contexts, FLIM may provide information not only on the presence, but also on enzymatic activity or cellular signaling, etc., but FLIM in practice provides much less detail and is much less efficient than it is possible with the present invention and theoretically possible, in particular because FLIM does not record spectral shifts or any wavelength dependence during the time of fluorescent decay. The wavelength dependence during the time of fluorescent decay contains however valuable additional analytical and/or diagnostic information, in particular for discriminating between different molecular species and activities, or e.g. identifying different steps in a molecular relaxation cascade.

In some other embodiments of the present invention, time-consuming scans as compared, for example, with conventional FLIM may be avoided.

In some embodiments of the present invention, the data stream is not ambiguous to spectral differences. For example, a hyperspectral or wavelength resolution may allow the differentiation of different molecules exhibiting similar phasor patterns, but at different wavelengths, contrary e.g. to conventional FLIM.

In some other embodiments of the present invention, it is possible to obtain a high resolution of spectral details increasing the efficiency and selectivity of conventional FLIM.

In some embodiments of the present invention, the device or system according to the present invention may be particularly suitable for research and/or clinical use, particularly for mass screenings of pathogens and/or immunity against those, for example during a pandemic.

In some other embodiments of the present invention, it is advantageously possible to transmit high-dimensional data over a lower-dimensional communication channel.

Although the present invention is described hereinafter primarily with reference to a device, system and/or method for performing imaging spectroscopy, in particular Fluorescence-Lifetime Imaging Spectroscopy (FLIM), more particularly Time-resolving Hyperspectral Imaging Spectroscopy (THIS), the present invention is not limited to these embodiments.

In the figures, in which same reference numerals denote identical or similar elements, values and so on, the following applies:
- **Fig. 1**: shows schematically some steps of an embodiment of a method according to the present invention for discretizing and multiplexing a three-dimensional data stream;
- **Fig. 2**: shows schematically some steps of another embodiment of a method according to the present invention for discretizing and multiplexing a four-dimensional data stream;
- **Fig. 3**: shows schematically a device or system for performing Time-Resolving Hyperspectral Imaging Spectroscopy (THIS) according to an embodiment of the present invention;
- **Fig. 4A**: shows schematically an application example of a method according to the present invention; and
- **Fig. 4B**: shows schematically an alternative application example of a method according to the present invention.

**Fig. 1** shows schematically some steps of an embodiment of the method according to the present invention for discretizing a three-dimensional data stream, in particular a continuous three-dimensional data stream, in a highly simplified view.

In FIG. 1, a three-dimensional schematic representation of the abstract concept of discretizing multi-dimensional data in at least one of its dimensions into slices, and multiplexing these slices into one dimension of a two-dimensional data set is shown.

Thereby, a three-dimensional data set or stream (1) with coordinates x, y, z (2) may preferably be discretized to volume elements or voxels, e.g. in a rectangular slab, and converted to a sequence 3 with index i, of two-dimensional data sets 4, e.g. x-y data sets, along the x dimension. Successive two-dimensional data sets 4, e.g. x-y data sets, correspond to the index i (5) discretizing along the remaining dimension, e.g. z, and multiplexed along one of the two other dimensions, e.g. x.

As an example, a three-dimensional (e.g. two-dimensional image x, y, and time) data stream of a movie may accordingly be discretized and/or mapped over the single dimension of a data channel, such as modulation on a radio signal. In such a case, the flow of time is broken up into still images (x, y), which are further broken up into lines and pixels along the lines, and the pixels may be transmitted serially within a serial sequence of image frames.

**Fig. 2** shows schematically and in a highly simplified view some steps of another embodiment of a method according to the present invention for discretizing a four-dimensional data stream, in particular a continuous four-dimensional data stream, more particularly a THIS data stream.

The four-dimensional data stream may exemplarily be a recorded list of time-tagged, location-tagged and wavelength-tagged detection events obtained, e.g. with a detection sensor as previously described and/or a device or system according to the present invention, for example a THIS data stream.

FIG. 2 shows exemplarily a THIS four-dimensional data set 6 with coordinates x, y, t, λ (7) discretized to four-dimensional voxels, e.g. in a rectangular slab, which is however not shown explicitly due to the difficulty of drawing a four-dimensional object.

The example of FIG. 2 is exemplarily explained below in the context of THIS, but shall not be construed as limiting the broader claim of applicability.

Similar to the abstract representation of the idea in FIG. 1, the implementation of THIS multiplexes preferably one out of four data dimensions onto one of them, namely time.

This is in particular possible when the time span of fluorescence decay is measured in nanoseconds, or below, so that successive time slices spaced, e.g. on the microsecond scale, are available for the multiplexing.

A natural candidate for being discretized and multiplexed onto the time axis may exemplarily be one of the spatial dimensions of the sample, e.g. y.

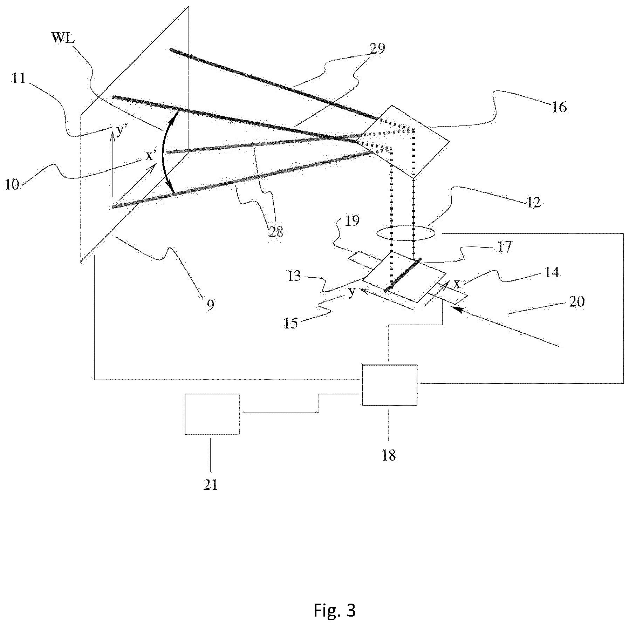

Using one of the spatial dimensions of the sample, there e.g. y, may advantageously lead to the operation of a scanner where the sample is moved rapidly through the field of view, creating a natural correlation between y and t. This "scanner operation modus" may optionally and as an example only be implemented by having the sample taking the form of a tape, or being e.g. spread onto a tape, which is movable or driven in a controlled and/or automatic way through the field of view along the y-direction. A corresponding embodiment of the invention is exemplarily shown and explained in further details in FIG. 3

The four-dimensional data set or stream 6 of four-dimensional voxels with coordinates x, y, t, λ (7) is preferably converted to a sequence 8, with index j for discrete slices of the four-dimensional data set or stream 6 in y, of three-dimensional x-λ-t data sets multiplexed along the t-dimension.

This principle may however be applied to any four-dimensional data set with appropriately chosen and discretized coordinates.

By analogous extension, the same principle may also be applied to any of higher-dimensional data sets.

In THIS, the coordinates x, y may preferably refer to the spatial coordinate in the image of the sample, t may preferably be the time, and λ may preferably be the wavelength, e.g. of fluorescence.

A four-dimensional voxel may thus preferably contain the fluorescent intensity at a location x, y, for a time t and a wavelength λ.

The four-dimensional data may exemplarily be discretized in the y-direction multiplexed on the time axis into three-dimensional data sets, e.g. of fluorescence, over x, λ, t. In other words, discretized y is multiplexed onto the t axis with index j.

**Fig. 3** shows schematically and in a highly simplified perspective view a device or system 100 according to one embodiment of the present invention for performing imaging spectroscopy, in particular Fluorescence-Lifetime Imaging Spectroscopy, more particularly a Time-resolving Hyperspectral Imaging Spectroscopy (THIS) device or system.

The example of FIG. 3 is exemplarily explained below in the context of THIS, but shall not be construed as limiting the broader claim of applicability.

In FIG. 3, dashed lines indicate optional data communication and/or connection, preferably bilateral data communication. The data communication may be realized by the way of any known technique.

FIG. 3 shows a schematic representation of an embodiment of the present invention where THIS is performed by a scanner. The scanner may preferably move a sample to be investigated along its y coordinate. In this way a succession of data resolved with respect to x, λ, and t may be rapidly recorded.

The device or system of FIG. 3 exemplarily comprises a CUTID sensor 9 as detection sensor with local coordinates exemplarily designated as x' (10), y' (11). However any other detection sensor as previously described in the device or system according to the present invention may be used as well.

The CUTID sensor 9 may thereby be set up and/or arranged such that an optical element 12, e.g. a lens, in particular a microscope lens, images from the sample plane 13, or parts of the sample plane, with coordinates x (14), y (15) onto the x' (10), y' (11) surface of the CUTID sensor 9.

This may optionally occur via at least one wavelength-dispersive element 16, e.g. a grating, in particular a diffraction grating, being appropriately configured, designed and/or arranged.

As can be seen in the embodiment of FIG. 3, only the x' dimension of the detection sensor 9 corresponds to the x dimension of the sample. The y' dimension of the detection sensor 9 corresponds to fluorescence wavelength as resolved by the at least one wavelength-dispersive element 16.

The reason is that in the embodiment of FIG. 3, the sample may be excited to fluorescence by a line focus 17, in particular a pulse line focus, of the excitation light source. The line focus 17 of the excitation light source may thereby preferably orientated parallel to the x-direction 14.

The line focus 17 of the excitation light source may thereby be imaged along the x' (10) coordinate on the detection sensor 9 while at least one wavelength-dispersive element 16 spreads the image into a spectrum of different wavelengths indicated schematically in FIG. 3 by the schematically indicated fan WL from a lower end part of the fan WL defined by the lines 28 to a higher end part of the fan WL defined by the lines 29 onto the y' (11) coordinate on the detection sensor 9.

Therefore, in the embodiment of FIG. 3 only a line within the image place actually emits fluorescent light.

The indicated fan WL from a lower end part indicated by the lines 28 to a higher end part indicated by the lines 29 onto the y' (11) coordinate on the detection sensor 9 are meant only to schematically indicate a wavelength spectrum.

In particular, the directions of the spread of the fan WL may indicate longer wavelengths being diffracted at larger angles. However, the directions of the spread of the fan WL are not meant to mean any actual wavelengths or to restrict to any particular wavelengths.

In the context of the present invention, the range of the wavelengths may preferably lie in the the visible and nearly visible part of the electromagnetic spectrum, e.g. in a wavelength range from some nanometers, e.g. 150 nanometers, up to some hundred nanometers, e.g. 1500 nanometers. However, other wavelengths ranges may be considered as well.

In the context of the present invention the spatial resolution of the detecting device, for example for the wavelength, in particular the image resolution of the detecting device, for example for the wavelength, may preferably be of at least ten or tens of spectral channels.

As an application example, the sample may move or may be moved or driven, in particular rapidly, along e.g. the y (15) coordinate while the excitation light is pulsed at a rapid rate.

The motion speed of the sample and the pulse rate of the excitation light source may optionally be matched such that each pulse excites a line on the sample, in particular adjacent to the previous one which has moved on.

Optionally, the width of the line focus 17 may be ideally matched to the resolution of the imaging system. Under these conditions, the fluorescence or generally optical decay following each excitation pulse may be resolved by the spatial resolution of the detection sensor 9 with respect to the x-coordinate 14 and the wavelength λ in the spectrum between the schematically indicated fan WL from a lower end part indicated by the lines 28 to a higher end part indicated by the lines 29. Furthermore, time t may under these conditions be resolved directly by the data recording.

The sample coordinate y may thus be discretized by the sample motion and successive excitation of adjacent lines, and be multiplexed in time, corresponding to the sequence 8 in FIG. 2. The coordinates x, y, t, λ correspond to coordinates x, y, t, λ (7) shown in FIG. 2.

In the embodiment shown in FIG. 3, the sample may optionally be present on the surface of e.g. a tape, or other e.g. planar substrate 19, that may be in particular pulled and/or driven through the field of view of a viewing device, e.g. a microscope.

The y-direction 15 may be aligned with the sample motion, and the x-direction 14 may be or is perpendicular to the y-direction 15.

Sample excitation radiation or light from the excitation source 20, in particular a laser, for example a picosecond-pulsed laser and/or a laser with a particular spectro-temporal profile, e.g. coherently controlled laser excitation, may be shaped into a line focus 17 preferably aligned with the x-direction 14.

The optical element 12, e.g. a lens, in particular a microscope lens, may image the excitation line onto the CUTID sensor 9 in its x'-direction 10 via reflection from the at least one wavelength-dispersive element 16, in particular such that the pertinent wavelength spread of the fluorescent spectrum preferably fills the available range in the y'-direction 11 on the detection sensor 9.

The width of the line focus 17 may thus preferably match the spatial resolution of the imaging optics.

Optionally, the speed of the sample motion may be kept below a threshold where the sample would move by more than the focal-line width within the time interval of interest for the fluorescent decay, i.e., typically up to about 100 ns in the case of proteins.

Optionally, the excitation pulse may be repeated at a rate such that an excitation occurs whenever the sample has moved by the width of the line focus 17.

Optionally, the speed of the sample motion and the rate of the optical excitation of the excitation light source may be controlled and/or regulated by at least one processing unit, control and/or regulating unit according to the present invention.

Optionally, the speed of the sample motion and the rate of the optical excitation of the excitation light source may be controlled and/or regulated in such a way that, preferably adjacent, tightly spaced lines of the sample may be excited successively as the sample moves through the field of view and a data set may be resolved, preferably for each pulse or excitation, in the sample coordinate x, time t, and wherein the wavelength λ is recorded while the sample coordinate y is resolved through the sequence 8 of data sets.

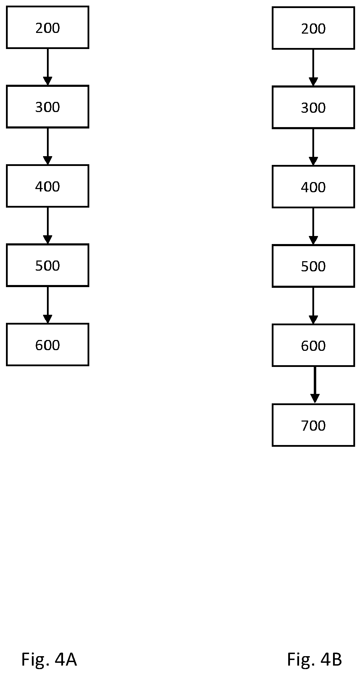

**Fig. 4A** shows schematically a possible application example of the method according to the present invention.

Without implying any constraint on other possible usage cases, the following application example shall, however, illustrate how the present invention may exemplarily be used in practice. Other applications, in particular on different samples types, e.g. molecules, chemicals and so on, are considered as well.

In one embodiments of the present invention an application may exemplarily be in the detection of proteins indicative of a pathogen, e.g. the COVID-19 virus, and/or e.g. in the detection of immunity against it.

COVID-19 poses a particular challenge in that an unknown, but probably significant, number of infections can go without symptoms. Thus, a person who is immune but shows no presence of an active infection may most likely have been infected in the past. Knowledge of past infections may be important for 1) tracing of past contacts and quarantining possible disease carriers, 2) epidemiological modelling and/or 3) to assess whether a person can safely return to the workforce. The latter aspect may be particularly relevant, e.g. for healthcare workers.

The exemplarily usage scenarios may be implemented, in order of increasing sensitivity and selectivity of imaging spectroscopy, in particular Fluorescence-Lifetime Imaging Spectroscopy (FLIM), more particularly Time-resolving Hyperspectral Imaging Spectroscopy, with at least one of:
- using a CUTID sensor in place of one of those currently and conventionally used in FLIM, in particular for faster operation and higher throughput;
- performing THIS for higher specificity due to use of the data being present in fully resolved four-dimensional form instead of a three-dimensional projection from four dimensions as in regular FLIM;
- performing THIS in conjunction with the use of laser pulses, in particular in conjunction with the use of a particular spectro-temporal profile (e.g. Wigner distribution) matched for optimal and highly specific excitation of a particular molecular species of interest (The latter concept previously introduced by the way of reference above and known in chemistry as "coherent control" typically involves an empirical search for a Wigner distribution that matches a desired outcome (here e.g. excitation to fluorescence) like a key to a lock).

In order to detect an active infection, one may exemplarily search for the presence of the four structural proteins of the COVID-19 virus, which are known as "spike" (S), "envelope" (E), "membrane" (M), and "nucleocapsid" (N). If any of these proteins are detected in a patient, then this would indicate the presence of viral particles.

One exemplary procedure or method according to the present invention may encompass as a first step 200 obtaining samples of species of interest, e.g. of these four proteins, e.g. (S), (E), (M) and/or (N), from e.g. vendors of biochemical reagents. These proteins may be synthesized in pure form, and must not be extracted from the virus itself, they may thus be safe to handle and available in amounts sufficient for laboratory work.

Then, in a further, subsequent step 300, specific signal signatures of the sample of species of interest may be obtained, e.g. by placing a small amount of the respective protein(s) sample into a FLIM or THIS device or system, in particular according to the present invention, having optionally coherently controlled laser excitation. A "library" or database of corresponding signatures, called below "reference signatures", may further be compiled in a step 400 and/or a previously generated database or library may be used. As an example, a typical way of sample preparation may be to prepare an aqueous suspension of the protein(s), or species of interest, from dry powder or concentrated suspension, and put a small amount onto e.g. a nitrocellulose-coated glass slide, which would then in turn be inserted and analyzed into the FLIM or THIS device or system. Reference signatures for the particular species of interest, e.g. molecules and/or proteins, may thus be collected and accordingly stored, and thus in turn, a library or database of corresponding reference signatures may be generated.

In a following step 500, samples of interest, e.g. patient samples, such as mouth swabs, may be inserted into a FLIM and/or THIS device or system of the present invention and corresponding data may be recorded and/or measured in order to test them in a subsequent step 600 for the presence of such reference signatures in the sample, e.g. by comparison with a "library" or database of corresponding signatures.

In one exemplarily similar procedure, a library of FLIM and/or THIS signatures, in particular reference signatures, may be compiled for nonstructural proteins (NSP) e.g. of a virus, e.g. the COVID-19 virus. Nonstructural proteins (NSP) are expressed only inside an infected cell, performing various functions that are essential for viral replication.

The detection of signatures corresponding to these nonstructural proteins (NSP) in a patient sample may then be an indication of the intensity of the infection itself, as opposed to the mere presence of a virus.

**Fig. 4B** shows another exemplary and optional procedure or method according to the present invention, which may encompass in a first step 200 obtaining other synthetic species , e.g. synthetic antibodies against particular viral proteins.

The steps 300 to 600 are analogue to the method in Fig. 4A. A corresponding explanation is omitted in order to avoid repetition.

Following the step 600, it may then be possible in an optional step 700 to measure and/or assess how the corresponding FLIM and/or THIS signature changes due to the presence of another species , e.g. an antibody, and/or create and/or store a corresponding entry in a database or library for further reference and comparison.

This procedure makes use of a particular strength of FLIM, and, by extension, of THIS, namely that it detects whether a particular molecule is in close proximity to another. In such cases, excitation energy can be transferred from one species, e.g. molecule to another one by a process known as Forster Resonant Energy Transfer (FRET). The latter occurs only across small distances of less than about 10 nanometers, and is therefore an indicator of the proximity of the photon-absorbent to the fluorescence-emitting molecule which may be indicated by the FLIM and/or THIS response changing in characteristic ways.

Once it is understood how the FLIM and/or THIS signature of a particular viral protein of interest changes under exposure to antibodies, one may thus expose a sample comprising purified viral structural protein (S, E, M, N) to patient blood plasma and monitor for changes in their FLIM and/or THIS response.

It is to be noted that human antibodies generally differ from artificial ones, and possibly also between individuals. It is therefore rather likely that a response will not be identical, but rather modified, compared to as that obtained from artificial antibodies. However, a modified FLIM and/or THIS response may still be indicative of the presence of antibodies against the viral proteins of interest. Furthermore corresponding FLIM and/or THIS measurements may yield to characteristic patterns in which the FLIM and/or THIS response of viral proteins of interest changes or modifies due to antibodies because antibodies tend to target particular reactive sections of a given antigen (here the viral proteins).

### Reference numerals

- 1: three-dimensional data set or stream
- 2: three-dimensional system of coordinates or coordinates, e.g. coordinates x, y, z
- 3: sequence with index i of two-dimensional data sets or streams
- 4: two-dimensional data set or stream
- 5: index i (5) for indexing discretisation of a three-dimensional data set or stream into two-dimensional data sets or streams along the remaining dimension
- 6: four-dimensional data set or stream, e.g. THIS data set or stream
- 7: four-dimensional system of coordinates or coordinates, e.g. coordinates x, y, t, λ
- 8: sequence index j for discrete slices of a four-dimensional data set or stream along one coordinate of three other dimension data multiplexed along one of the three other dimensions
- 9: detection sensor, e.g. CUTID or LAPPD sensor
- 10: x' coordinate or x'-direction
- 11: y' coordinate or y'-direction
- 12: optical element, e.g. lens, microscope lens
- 13: target, sample or sample plane
- 14: x coordinate or x-direction
- 15: y coordinate or y-direction
- 16: wavelength-dispersive element, e.g. diffraction grating, prism
- 17: line focus
- 18: processing, control and/or regulating unit
- 19: means for controlling and/or regulating movement of a sample or sample support
- 20: excitation (light) source, e.g. laser
- 21: storage medium
- 100: device or system for performing imaging spectroscopy, in particular Fluorescence-Lifetime Imaging Spectroscopy (FLIM), more particularly Time-resolving Hyperspectral Imaging Spectroscopy (THIS)
- 200: obtaining sample(s) of species of interest
- 300: obtaining reference signatures, in particular THIS reference signatures, of the species of interest
- 400: creating a database of reference signatures of the species of interest
- 500: measuring and/or recording data, in particular imaging spectroscopy, FLIM and/or THIS data, of a sample to be investigated
- 600: comparing the obtained data of the sample to be investigated with stored and/or previously obtained reference signatures of particular species of interest
- 700: (optional) assessing how the reference signature of a sample comprising a particular species of interest changes in presence of another species in the sample and/or storing the assessment and/or corresponding measurement
- WL: fan indicating schematically different wavelengths

## Claims

1. A device or system (100) for performing imaging spectroscopy, in particular Fluorescence-Lifetime Imaging Spectroscopy, more particularly Time-resolving Hyperspectral Imaging Spectroscopy, the device (100) comprising at least:
- a detection sensor (9) configured for detecting and providing a multi-dimensional data stream, or list, of time-tagged, location-tagged and/or wavelength-tagged detection events.

2. The device or system (100) according to claim 1, wherein the detection sensor (9) is configured for providing a continuous data stream without time-gating or otherwise modulating a light sensitivity of the detection sensor (9).

3. The device or system (100) according to claim 1 or 2, wherein the device or system (100) according to the present invention is provided, embodied and/or configured for detecting, measuring and/or resolving a time dependence and/or a wavelength dependence of the data stream, following preferably pulsed, or otherwise modulated optical excitation.

4. The device or system (100) according to any (one) of the preceding claims, wherein the detection sensor (9) is a two-dimensional detection sensor, in particular an imaging detection sensor.

5. The device or system (100) according to any one of the preceding claims, wherein the detection sensor (9) is a Continuous Ultrafast Time-resolving Imaging Detection (CUTID) sensor, in particular a Large-Area Picosecond Photodetector (LAPPD).

6. The device or system (100) according to any one of the preceding claims, comprising:
- at least one excitation source (20), in particular an excitation light source, wherein optionally at least one excitation source (20) is designed and/or configured for coherently controlled operation;
- at least one wavelength-dispersive element (16), in particular a grating or a prism, wherein optionally at least one wavelength-dispersive element (16) is configured, designed and/or arranged such that radiation emitted from an excitation source (20) via reflection and/or transmission from and/or through at least one wavelength-dispersive element (16) is spanned and/or imaged from a sample or sample plane (13) to a surface of the detection sensor (9) by means of at least one optical element (12);
- at least one optical element (12), in particular a lens system;
- at least one means for projecting light emitted from the excitation source (20) as a line focus along one first direction of a or the sample or sample plane (13); and/or
- at least one means for moving or driving the sample (19) in at least one second direction, preferably perpendicular to the first direction.

7. The device or system (100) according to any one of the preceding claims comprising a processing, control and/or regulating unit (18) according to any one of claims 8 to 10.

8. A method for performing imaging spectroscopy, in particular Fluorescence-Lifetime Imaging Spectroscopy, more particularly Time-resolving Hyperspectral Imaging Spectroscopy, comprising at least the following steps:
- detecting, recording and/or providing a multi-dimensional data stream (6), or list, of time-tagged, location-tagged and/or wavelength-tagged detection events of or from a device or system (100) for performing imaging spectroscopy according to anyone of the claims 1 to 7;
- discretizing the multi-dimensional data stream (6) in one or more of its dimensions; and
- multiplexing the discretized multi-dimensional data stream (6) onto at least one of the other data dimensions.

9. The method according to claim 8 comprising a step of extracting a time-domain and/or frequency-domain from the data stream (6), or list, of time-tagged, location-tagged and/or wavelength-tagged detection events.

10. The method according to any one of the preceding claims 8 to 9, wherein the multi-dimensional data stream (6) is discretized in at least one spatial dimension of a sample on which imaging spectroscopy, in particular Fluorescence-Lifetime Imaging Spectroscopy, more particularly Time-resolving Hyperspectral Imaging Spectroscopy, is intended to be, is or was performed, and multiplexed onto a time axis.

11. A processing unit, control and/or regulating unit (18) provided, configured and/or programmed for executing the method according to any one of the claims 8 to 10.

12. The processing unit, control and/or regulating unit (18) according to claim 11 provided, configured and/or programmed for outputting to and/or receiving signal(s) from at least one device or system (100) for performing imaging spectroscopy according to any one of claims 1 to 7, or being at least in data communication with it.

13. A digital, particularly a non-volatile storage medium, particularly a machine-readable data storage device, particularly a disk, CD, EPROM or DVD, with electrically readable control signals provided and/or configured to interact with a programmable computer system such that the mechanical steps of a method according to any one of claims 8 to 10 are prompted.

14. A computer program product with a program code that is volatile or saved on a machine-readable medium for prompting or executing the mechanical steps of the method according to any one of claims 8 to 10 when the computer program product runs on a computer.

15. A computer program with a program code for the execution of a method according to any one of claims 8 to 10 when executing the program on a computer.
